# EUROPÄISCHE PATENTSCHRIFT

(11) **EP 0 639 304 B1**
(45) Veröffentlichungstag und Bekanntmachung des Hinweises auf die Patenterteilung: **13.05.1998**
(21) Anmeldenummer: 94906880.3
(22) Anmeldetag: 18.02.1994
(51) Int. Cl.: H02K 23/08, H02K 7/106, H02P 3/06

(54) **REIHENSCHLUSSMOTOR, INSBESONDERE UNIVERSALMOTOR, MIT EINER BREMSEINRICHTUNG**
INVERSE SPEED MOTOR, ESPECIALLY A UNIVERSAL MOTOR, WITH A BRAKING DEVICE
MOTEUR SERIE, EN PARTICULIER MOTEUR UNIVERSEL, AVEC UN SYSTEME DE FREINAGE

(30) Priorität: 09.03.1993 DE 4307357
(43) Veröffentlichungstag der Anmeldung: 22.02.1995
(73) Patentinhaber: ROBERT BOSCH GMBH, 70442 Stuttgart (DE)
(72) Erfinder: KIRN, Manfred, D-70567 Stuttgart (DE)
(86) Internationale Anmeldenummer: DE9400169
(87) Internationale Veröffentlichungsnummer: WO9421027

(56) Entgegenhaltungen:
- EP-A- 0 367 987
- DE-A- 3 929 556
- PATENT ABSTRACTS OF JAPAN vol. 11, no. 288 (E-542) 17. September 1987 & JP-A-62 089 459 (HITACHI) 23. April 1987

## Beschreibung

### Stand der Technik

Die Erfindung betrifft einen Reihenschlußmotor, insbesondere Universalmotor, mit einer Bremseinrichtung nach dem Oberbegriff des Anspruchs 1.

Reihenschlußmotoren, die auch häufig als Universalmotoren bezeichnet werden, werden eingesetzt bei beispielsweise Elektrohandwerkzeugen wie Heckenscheren, Kettensägen, Rasenmäher, Schleifmaschinen, Kreissägen oder Elektrohobel. Nach Abschalten der Netzspannung weisen diese Maschinen aufgrund der kinetischen Energie ihres Antriebes eine längere Nachlaufzeit auf. Die nachlaufenden Schneidemesser, Scheren, Sägen, Schleifscheiben oder Ketten stellen für den Bediener dieser Geräte eine nicht unerhebliche Verletzungsgefahr dar.

Es ist daher zweckmäßig, beim Abschalten der Netzspannung für ein schnelles Abbremsen des Motors und damit des Werkzeuges zu sorgen.

Es ist bekannt, zum Abbremsen des Motors mechanische Bremsvorrichtungen einzusetzen. Diese sind jedoch wenig geeignet, da sie von der Konstruktion aufwendig, teuer und verschleißanfällig sind.

Weiterhin ist bekannt, eine elektrische Abbremsung eines Universalmotors üblicherweise durch einen selbsterregten Kurzschluß auf der Remanenzinduktion im magnetischen Kreis des Motors zu realisieren. Hierbei ist jedoch nachteilig, daB die von der Remanenzinduktion im Anker induzierte Spannung nicht immer ausreicht, um die Selbsterregung des Universalmotors zuverlässig in Gang zu setzen. Zur Behebung dieses Nachteils ist weiterhin auch bereits vorgeschlagen worden, die Zündung des Bremsvorgangs über einen Kondensator, der über eine Diode während der Betriebszeit aufgeladen wird, durchzuführen. Hierbei ist jedoch nachteilig, daß der Zündvorgang nur einmalig durchgeführt werden kann, so daß, wenn er erfolglos verläuft, eine erneute Zündung nicht mehr möglich ist.

Aus der DE-OS 38 37 943 ist bekannt, die Zündung über einen, auch nach dem Abschalten des Motors mit Wechselspannung beaufschlagten Kondensator durchzuführen. Hier erzeugt der über den Kondensator fließende Strom in der außerhalb des Bremskreises liegenden Feldspule ein elektrisches Feld, das im drehenden Anker eine Spannung induziert, die so groß ist, daß ein sicheres Zünden des Bremsvorgangs erreicht wird.

Neben dem benötigten relativ großen zusätzlichen Einbauplatz des Kondensators ist von Nachteil, daß der Kondensator und damit die eine Feldwicklung bei eingestecktem Gerät die ganze Zeit am Netz hängen. Da zum sicheren Zünden des Bremsvorgangs entsprechend groß dimensionierte Kapazitäten notwendig sind, verursacht der über den Kondensator fließende Strom ein beunruhigendes Brummen.

Aus der JP-A-62089459 ist eine Bremseinrichtung für einen Elektromotor bekannt, bei dem zum Einleiten des Bremsbetriebes der Bürstenring mit der Feldwicklung gegen die Drehrichtung verschoben wird, um ein Bürstenfeuer zu vermeiden. Zum Bremsen wird eine Anordnung mit einer Zusatzspule verwendet, die in einem Nutenpaar eines Polschuhs angeordnet ist. Die Nutenanordnung ist entgegen der Drehrichtung aus der Symmetrieachse verschoben.

Aus der DE 3929566 A1 ist ein Stromwendermotor bekannt, bei dem zum Bremsen wohl die Feldwicklungen als auch Wendepolwicklungen verwendet werden.

### Vorteile der Erfindung

Der Erfindung liegt daher die Aufgabe zugrunde, einen Reihenschlußmotor der gattungsgemäßen Art zu schaffen, bei dem in einfacher Weise eine sichere Selbsterregung des Motors beim Abschalten vom Netz und damit eine Minimierung des Nachlaufens von Werkzeugen erreicht wird.

Erfindungsgemäß wird diese Aufgabe durch die Merkmale des Anspruchs 1 gelöst.

Es wurde gefunden, daß hiermit bei einer elektrodynamischen Bremsung nach dem Prinzip der Selbsterregung während des Umschaltens vom Normalbetrieb in den Bremsbetrieb für eine ausreichend lange Zeit die Zusatzspulen kräftig erregt werden können, damit eine große Induktionsspannung im auslaufenden Anker und damit eine sichere Zündung des Bremsvorgangs bewirkt wird.

In vorteilhafter Ausgestaltung der Erfindung ist vorgesehen, daß die Zusatzspulen den Feldspulen zuschaltbar und/oder alternierend einschaltbar angeordnet sind.

Hiermit ist in vorteilhafter Weise möglich, das magnetische Feld im Generatorbetrieb und damit Bremsbetrieb mit den Zusatzspulen zu generieren, die entgegengesetzt zu den Feldspulen gepolt sind.

Es ist möglich, das magnetische Feld durch entsprechende Anordnung der Zusatzspulen statisch so zu verschieben, daß auch im Generatorbetrieb die Lage zu den kommutierenden Ankerspulen sich wie im Motorbetrieb verhält, und sich damit, trotz Ankerverschaltung für den Motorbetrieb, auch im Generatorbetrieb eine optimale Kommutierung ergibt, das heißt, daß im Motorbetrieb die normalen Feldspulen eingeschaltet sind und im Generatorbetrieb (Bremsbetrieb) die Zusatzspulen eingeschaltet oder zugeschaltet werden.

Weitere vorteilhafte Ausgestaltungen der Erfindung ergeben sich aus den in den Unteransprüchen aufgeführten MaBnahmen.

### Zeichnung

Die Erfindung wird nachfolgend in Ausführungsbeispielen anhand der zugehörigen Zeichnungen näher erläutert.

Es zeigen:
- Figur 1: einen Schnitt durch einen Reihenschlußmotor im Bereich eines Polschuhbleches;
- Figur 2: einen weiteren Schnitt mit angedeuteten Feld- bzw. Ankerspulen;
- Figur 2a bis Figur 2c: vereinfachte Zeigerdiagramme des Magnetflusses nach Figur 2;
- Figur 3: einen weiteren Schnitt durch ein Polschuhblech;
- Figur 4: einen weiteren Schnitt durch ein Polschuhblech;
- Figur 5: einen weiteren Schnitt durch ein Polschuhblech;
- Figur 6: einen weiteren Schnitt durch ein Polschuhblech;
- Figur 7: schematisch eine Schaltungsanordnung mit Zusatzspulen und
- Figur 8: schematisch einen weiteren Schaltungsaufbau mit Zusatzspulen.

### Beschreibung der Ausführungsbeispiele

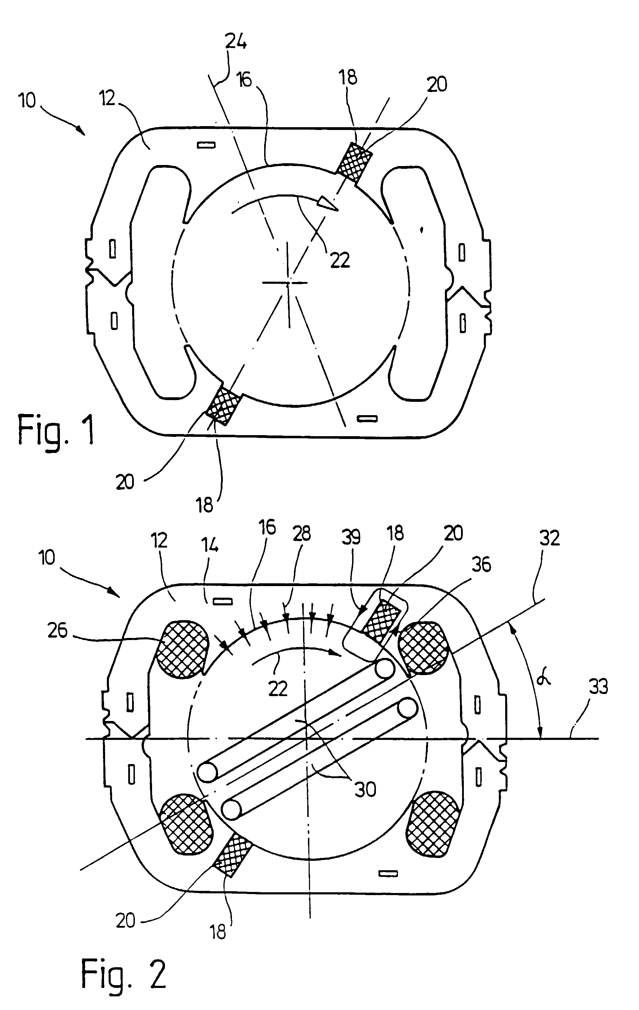

In Figur 1 ist ein allgemein mit 10 bezeichneter Reihenschlußmotor im Bereich eines Polschuhbleches 12 gezeigt. Das Polschuhblech 12 weist zwei gegenüberliegende Pole 14 auf, die in Polbogen 16 auslaufen. Die Polbogen 16 weisen jeweils eine Nut 18 auf. In der Nut 18 ist hier, schematisch angedeutet, eine Zusatzspule 20 angeordnet. Auf die Darstellung der Feldspulen wurde in Figur 1 aus Gründen der Übersichtlichkeit verzichtet. Der Pfeil 22 deutet die Drehrichtung des hier nicht dargestellten Ankers an. Mit der Linie 24 ist die elektrisch neutrale Zone des Motors 10 angedeutet, in der die Anordnung der Nut 18 einschließlich der Zusatzspule 20 bei Erregung der Zusatzspule 20 keinerlei Wirkung auf den Anker ausübt. Die Zusatzspule 20 ist daher in Richtung des Pfeiles 22 und damit in Drehrichtung des Ankers (vom Kollektor aus gesehen) verschoben angeordnet.

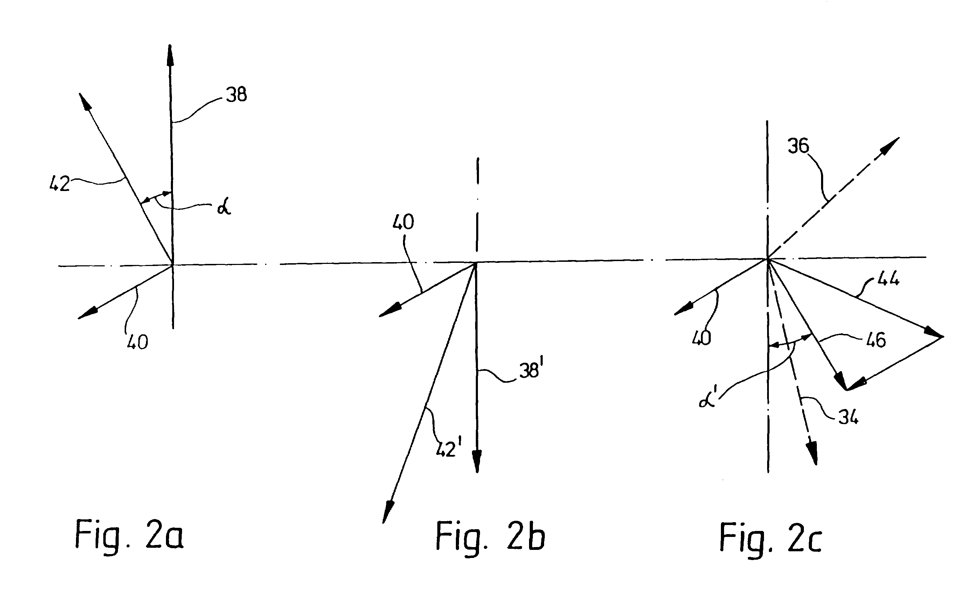

Anhand der Figur 2 ist die Wirkungsweise der Zusatzspulen 20 näher erläutert. Gleiche Teile sind mit gleichen Bezugszeichen wie in Figur 1 bezeichnet. Es sind weiterhin die um die Pole 14 gewickelten Feldspulen 26 angedeutet. Der Anker ist mit einer kommutierenden Spule 30 dargestellt, die wickeltechnisch auf zwei Nutenpaare verteilt ist. Mit 32 ist die Spulenachse der kommutierenden Spule 30 bezeichnet, die um einen Winkel Alpha zur Polmittenachse 33 verschoben ist. Die in der Nut 18 angeordnete Zusatzspule ist so zu verschalten, daß sich der in der Figur 2 dargestellte Stromfluß ergibt, das heißt, in der unteren Nut 18 ergibt sich ein Stromfluß in die Bildebene hinein. Die Zusatzspule 20 erzeugt dabei die angedeuteten magnetischen Teilfelder 34 und 36. Die mit 28 angedeuteten Felder entsprechen den Teilfeldern 34.

In den Figuren 2a, 2b und 2c sind die, aus der in Figur 2 gezeigten Darstellungen sich ergebenden Magnetfelder näher erläutert, wobei Figur 2a den Motorbetrieb zeigt, Figur 2b den Generatorbetrieb also den Bremsbetrieb ohne Zusatzspule zeigt, und Figur 2c die Wirkung der Zusatzspule 20. Im Motorbetrieb wird über die Feldspulen 26 ein Betriebsfeld 38 erzeugt. Da der Anker entsprechend der Feldverschiebung für den Motorbetrieb aus der Neutralen verschaltet ist, ergibt sich das Ankerquerfeld 40.

Aus dem Magnetfeld 38 und dem Ankerquerfeld 40 setzt sich das resultierende Feld 42 zusammen, das sich für den Motorbetrieb einstellt. Die Richtung des resultierenden Feldes 42 steht, um eine gute Kommutierung zu erreichen, etwa senkrecht zur Spulenachse 32. Ohne Anordnung der Zusatzspule 20 ergibt sich im Generatorbetrieb die in Figur 2b gezeigte magnetische Feldverteilung. Durch die Umschaltung der Feldspulen 26 ergibt sich das Magnetfeld 38' sowie das Ankerquerfeld 40 und das hieraus resultierende Feld 42'. Hiermit wird deutlich, daß bei einer unveränderten Ankerverschaltung durch die symmetrisch zur Polmittenachse 33 beim Generatorbetrieb genau entgegengesetzt erfolgte Feldverschiebung eine Kommutierung der Spulen 30 bezüglich des magnetischen Feldes in einer Lage erfolgt, in der in den kommutierenden Spulen 30 noch hohe Spannungen auftreten, die zu Kommutierungsproblemen, das heißt Bürstenfeuer, führen.

Gemäß der in Figur 2c gezeigten, durch die Anordnung der Zusatzpule 20 sich ergebenden Magnetflüsse wird für die kommutierende Spule 30 ein Feld erzeugt, das auch im Generatorbetrieb senkrecht zur Spulenachse 32 steht und damit eine gute Kommutierung auch im Generatorbetrieb ermöglicht. Durch die Anordnung der Zusatzspule 20 ergeben sich die Teilfelder 34 und 36, die zu einem resultierenden Feld 44 führen. Dieses resultierende Feld 44 ergibt zusammen mit dem Ankerquerfeld 40 das Bremsfeld 46. Das Bremsfeld 46 steht dabei etwa senkrecht zur Spulenachse 32 der kommutierenden Spule 30 und ergibt damit eine gute Kommutierung im Bremsbetrieb des Reihenschlußmotors. Durch die optimale Stellung von Bremsfeld 46 und Spulenachse 32 zueinander setzt auch die Selbsterregung selbst bei minimaler Resonanz, die praktisch immer vorhanden ist, sicher ein, besonders auch, da Kollektoroberfläche und Bürstenlauffläche durch die gute Kommutierung in einwandfreiem Zustand erhalten werden.

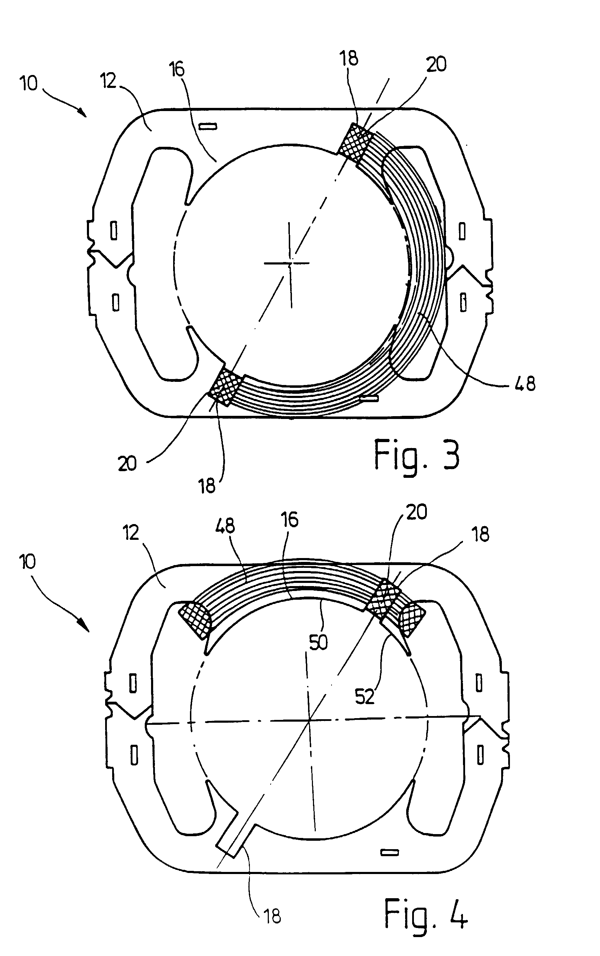

In den Figuren 3 bis 6 sind verschiedene Möglichkeiten der Anordnung bzw. der Art der Zusatzspulen 20 gezeigt, wobei für die Wirkungsweise der Zusatzspule 20 das bereits zu den Figuren 2 bzw. 2a bis 2c Gesagte zutrifft. Um die für das Bremsfeld 46 notwendige Wirkung zu erzielen, ist die Anordnung der Zusatzspule 20 in der Nut 18 entsprechend der bereits in Figur 2 erläuterten Stromrichtung festgelegt. Auf die Bezeichnung von Einzelheiten wurde in den Figuren 3 bis 6 verzichtet.

In Figur 3 wird in die Nuten 18 eine Zusatzspule 20 eingelegt, und der Wickelkopf 48 der Zusatzspule 20 wird über den Durchmesser des Polpaketes gelegt. Es ist auch möglich, hier jedoch nicht dargestellt, den Wickelkopf 48 der Zusatzspule 20 zu teilen und nach beiden Seiten über den Durchmesser des Polpaketes zu legen.

Eine weitere Möglichkeit der Anordnung der Zusatzspule ist in Figur 4 gezeigt. Die Zusatzspule 20 ist dabei geteilt und mit ihrem Wickelkopf 48 über jeweils ein Polbogenteil 50 bzw. 52 geführt. Für die Funktion der Zusatzspule reicht an sich die Anordnung einer Zusatzspule 20 in einer Polschuhhälfte aus. Da jedoch die Wirkung mit einer Zusatzspule 20 in der Regel nicht ausreichend ist, sind zweckmäßigerweise Zusatzspulen in jeder Polschuhhälfte, das heißt auch um die in Figur 4 gezeigte untere Polschuhhälfte zweckmäßig. In Figur 4 ist jedoch nur eine Zusatzspule an der oberen Polschuhhälfte dargestellt. Der Einbau in ein geschlossenes Polpaket ist möglich.

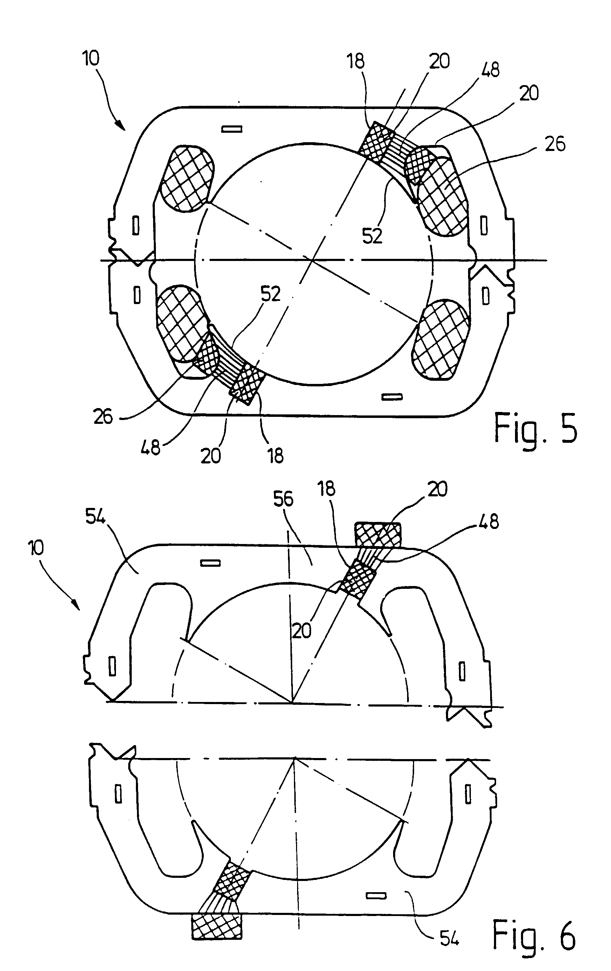

Wie in Figur 5 gezeigt können die Zusatzspulen 20 auch unter Einbeziehung der Feldspulen 26 angeordnet werden. Die Zusatzspulen 20 sind dabei mit ihrem Wickelkopf 48 über die Polbogenteile 52 geführt. Die Zusatzspulen 20 sollten jedoch in diesem Fall etwa die doppelte Windungszahl der Feldspulen 26 aufweisen. Für die Funktion der Zusatzspulen 20 müssen in diesem Fall die Feldspulen 26 und die Zusatzspulen 20 in den Bremskreis geschalten werden. Da die Feldspulen 26 für den Bremsbetrieb jedoch umgeschaltet werden müssen, ist hier ein erhöhter Schaltaufwand erforderlich. Der Einbau in ein geschlossenes Polpaket ist auch in der gemäß Figur 5 gezeigten Anordnung möglich.

Der in Figur 6 gezeigte Reihenschlußmotor 10 besitzt einen geteilten Polschuh 54. Die Zusatzspule 20 ist hierbei mit ihrem Wickelkopf 48 über das Joch 56 gewickelt. Die Funktion der Zusatzspulen 20 kann hier auch mit nur einer Zusatzspule 20 erreicht werden, ist jedoch, wie bereits bei Figur 4 erwähnt, in aller Regel nicht mit einer ausreichenden Wirkung verbunden, so daß auch hier die Anordnung von zwei Zusatzspulen 20 wie in Figur 6 am unteren Polschuh 54 angedeutet erforderlich ist.

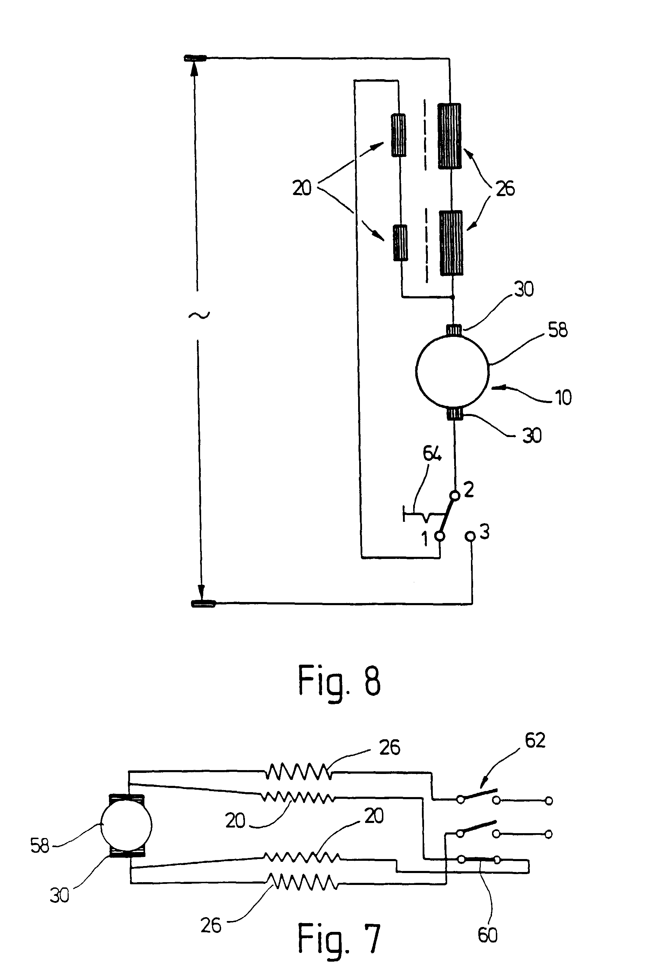

Die in Figur 7 gezeigte Schaltung verdeutlicht noch einmal den überraschend einfachen Schaltungsaufbau gemäß der Anordnung der Zusatzspulen 20 in der Figur 3, Figur 4 und Figur 6.

Figur 7 zeigt die Feldspulen 26, die in Reihe mit dem Anker 58 geschaltet sind. Weiterhin sind die Zusatzspulen 20 angeordnet, die mit einem Schaltkontakt 60 eines Ausschalters 62 und dem Anker 58 verbunden sind. Beim Ausschalten des Reihenschlußmotors 10 über den Ausschalter 62 wird gleichzeitig durch den Schaltkontakt 60 der Bremskreis mit den Zusatzspulen 20 geschlossen. Da die Zusatzspulen 20 nur kurzzeitig während der Bremsphase Strom führen, kann der Drahtquerschnitt klein gehalten werden, so daß der Raumbedarf für die Zusatzspulen 20 gering ist.

Insgesamt ergibt sich durch die Anordnung der Zusatzspule 20 in entsprechend vorgesehene Nute 18 die Möglichkeit, auch leistungsstarke Reihenschlußmotoren 10 in einfacher Art und Weise und ohne großen Aufwand zu bremsen. Dabei ist die Kommutierung des Reihenschlußmotors 10 einwandfrei, was sich günstig auf die Lebensdauer, besonders von Bürsten und Kollektoren, auswirkt. Darüber hinaus wird damit ein absolut sicherer Bremseinsatz erreicht, ohne irgendwelche Hilfsmittel zur Anregung der Selbsterregung zu verwenden. Die Motoreigenschaften werden durch den Einbau der Zusatzspule 20 nicht verändert.

Figur 8 zeigt schematisch eine weitere Schaltungsanordnung mit zugeschalteteten Zusatzspulen 20. Im Motorbetrieb liegen bei geschlossenem Schalter 64, der die Schaltkontakte 2 und 3 miteinander verbindet, die Feldspulen 26 sowie der Anker 58 in Reihe. Die für die Bremswirkung entscheidenden Zusatzspulen 20 sind hier hintereinander geschaltet. Bei Betätigung des Schalters 64 wird dieser in Ausstellung gebracht, indem dieser die Kontakte 2 und 1 miteinander verbindet und damit gleichzeitig der Anker 58 über die Zusatzspulen 20 kurzgeschlossen wird.

## Patentansprüche

1. Reihenschlußmotor, insbesondere Universalmotor (10), mit einem, eine Feldwicklung (26) aufweisenden Stator und mit einem rotierenden, über einen Kommutator und Bürsten (30) gespeisten Anker (58) sowie einer zum Umschalten in den Bremsbetrieb geeigneten Schaltanordnung bei der dem Polschuhblechpaket (12) des Stators neben den Feldspulen (26) wenigstens eine Zusatzspule (20) zugeordnet ist, wobei wenigstens ein Polbogen (16) wenigstens eines Polschuhs eine Nut (18) oder ein Nutenpaar aufweist, die innerhalb des von der Feldspule (26) umfaßten Polbogens (16) liegen, und wobei in der Nut (18) bzw. dem Nutenpaar die Zusatzspule (20) angeordnet ist, dadurch gekennzeichnet, daß die Nut (18) oder das Nutenpaar relativ zu der neutralen Zone (24) des Ankers in Drehrichtung (22) des Ankers verschoben ist und daß die Wicklung der Zusatzspule (20) derart ausgebildet ist, daß im seitlichen Jochteil im Bremsbetrieb kein Magnetfluß auftritt.

2. Reihenschlußmotor nach Anspruch 1, dadurch gekennzeichnet, daß die Zusatzspule (20) den Feldspulen (26) alternierend einschaltbar zugeordnet sind.

3. Reihenschlußmotor nach einem der vorhergehenden Ansprüche, dadurch gekennzeichnet, daß die Zusatzspule (20) in die Nut (18) eingewickelt oder eingeschoben ist.

4. Reihenschlußmotor nach einem der vorhergehenden Ansprüche, dadurch gekennzeichnet, daß die Zusatzspule (20) mit ihrem Wickelkopf (48) in einer Richtung über den Durchmesser des Polschuhblechpaketes (12) gelegt ist.

5. Reihenschlußmotor nach einem der vorhergehenden Ansprüche, dadurch gekennzeichnet, daß die Zusatzspule (20) mit ihrem Wickelkopf (48) in beiden Richtungen, je zur Hälfte, über den Durchmesser des Polschuhblechpaketes (12) gelegt ist.

6. Reihenschlußmotor nach einem der vorhergehenden Ansprüche, dadurch gekennzeichnet, daß die Zusatzspule (20) mit ihrem Wickelkopf (48), je zur Hälfte, über wenigstens einen Pol (14) bzw. den Polbogenteilen (50, 52) gelegt ist.

7. Reihenschlußmotor nach einem der vorhergehenden Ansprüche, dadurch gekennzeichnet, daß die Zusatzspule (20) mit ihrem Wickelkopf (48) unter Einbeziehung der Feldspule (26) über den Polbogenteil (52) des Pols (14) gelegt ist.

8. Reihenschlußmotor nach einem der vorhergehenden Ansprüche, dadurch gekennzeichnet, daß die Zusatzspule (20), bei geteiltem Polschuhblechpaket (12) mit ihrem Wickelkopf (48) über das Joch (56) gelegt ist.

## Claims

1. Series-wound motor, in particular a universal motor (10), having a stator, which has a field winding (26), and having a rotating armature (58), fed via a commutator and brushes (30), as well as having a switching arrangement, suitable for switching over into braking operation, in which in addition to the field coils (26) the pole shoe laminate stack (12) of the stator is assigned at least one additional coil (20), at least one pole arc (16) of at least one pole shoe having a groove (18) or a pair of grooves which are situated inside the pole arc (16) embraced by the field coil (26), and the additional coil (20) being arranged in the groove (18) or the pair of grooves, characterized in that the groove (18) or the pair of grooves is/are displaced relative to the neutral zone (24) of the armature in the sense (22) of rotation of the armature, and in that the winding of the additional coil (20) is designed in such a manner that there is no magnetic flux in the lateral yoke part during the braking operation.

2. Series-wound motor according to Claim 1, characterized in that the additional coils (20) are assigned to the field coils (26) such that they can be switched in alternately.

3. Series-wound motor according to one of the preceding claims, characterized in that the additional coil (20) is wound into or inserted into the groove (18).

4. Series-wound motor according to one of the preceding claims, characterized in that the additional coil (20) is laid with its winding overhang (48) in a direction over the diameter of the pole shoe laminate stack (12).

5. Series-wound motor according to one of the preceding claims, characterized in that the additional coil (20) is laid with its winding overhang (48) in both directions, by half in each case, over the diameter of the pole shoe laminate stack (12).

6. Series-wound motor according to one of the preceding claims, characterized in that the additional coil (20) is laid with its winding overhang (48), by half in each case, over at least one pole (14) or the pole arc parts (50, 52).

7. Series-wound motor according to one of the preceding claims, characterized in that the additional coil (20) is laid with its winding overhang (48) with the inclusion of the field coil (26) over the pole arc part (52) of the pole (14).

8. Series-wound motor according to one of the preceding claims, characterized in that the additional coil (20) is laid, in conjunction with a divided pole shoe laminate stack (12), with its winding overhang (48) over the yoke (56).

## Revendications

1. Moteur électrique série, notamment moteur universel (10) comprenant un stator avec un enroulement de champ (26) et un induit (58) rotatif, alimenté par l'intermédiaire d'un commutateur et de balais (30) ainsi qu'un dispositif de commutation permettant de commuter en mode de freinage, selon lequel
• au moins une bobine complémentaire (20) est associée au paquet de tôles des pièces en tôle polaires (12) du stator en plus des enroulements de champ (26),
• au moins un arc polaire (16) d'au moins une pièce polaire en tôle ayant une encoche (18) ou une paire d'encoches située à l'intérieur de l'arc polaire (16) entouré par l'enroulement de champ (26) et la rainure (18) ou la paire de rainures, reçoit la bobine complémentaire (20),
caractérisé en ce que
• la rainure (18) ou la paire de rainures est décalée par rapport à la zone neutre (24) de l'induit, dans le sens de rotation (22) de l'induit et,
• l'enroulement de la bobine complémentaire (24) est tel qu'il n'engendre pas de flux magnétique dans la partie latérale de l'étrier en mode de freinage.

2. Moteur électrique série selon la revendication 1,
caractérisé en ce que
les bobines complémentaires (20) sont susceptibles d'être branchées alternativement sur les bobines de champ (26).

3. Moteur électrique selon l'une des revendications précédentes,
caractérisé en ce que
la bobine complémentaire (20) est enroulée ou glissée dans la rainure (18).

4. Moteur électrique selon l'une des revendications précédentes,
caractérisé en ce que
la bobine complémentaire (20) est placée avec sa tête d'enroulement (48) dans une direction suivant le diamètre du paquet de tôle (12) de la corne polaire.

5. Moteur électrique selon l'une des revendications précédentes,
caractérisé en ce que
la bobine complémentaire (20) est placée avec sa tête d'enroulement (48) dans les deux directions chaque fois pour moitié sur le diamètre du paquet de tôles de la corne polaire (12).

6. Moteur électrique selon l'une des revendications précédentes,
caractérisé en ce que
la bobine complémentaire (20) est placée avec sa tête d'enroulement (48) chaque fois pour moitié sur au moins un pôle (14) ou des parties d'arc polaire (50, 52).

7. Moteur électrique selon l'une des revendications précédentes,
caractérisé en ce que
la bobine complémentaire (20) est placée avec sa tête d'enroulement (48) par-dessus l'arc de pièce polaire (52) du pôle (14) en combinaison avec la bobine de champ (26).

8. Moteur électrique selon l'une des revendications précédentes,
caractérisé en ce que
la bobine complémentaire (20) est placée avec sa tête d'enroulement (48) par-dessus l'étrier (56) dans le cas d'un paquet divisé de tôles de pièce polaire (12).
